# EUROPÄISCHE PATENTSCHRIFT

(11) **EP 4 151 885 B1**
(45) Veröffentlichungstag und Bekanntmachung des Hinweises auf die Patenterteilung: **08.10.2025**
(21) Anmeldenummer: 21197044.7
(22) Anmeldetag: 16.09.2021
(51) Int. Cl.: F16H 47/04, F16H 61/42, F16H 37/08, F16H 37/10

(54) **LEISTUNGSVERZWEIGUNGSGETRIEBE, VERFAHREN ZUM BETRIEB EINES LEISTUNGSVERZWEIGUNGSGETRIEBES SOWIE KRAFTFAHRZEUG MIT EINEM LEISTUNGSVERZWEIGUNGSGETRIEBE**
POWER SPLIT TRANSMISSION, METHOD FOR OPERATING A POWER SPLIT TRANSMISSION AND MOTOR VEHICLE WITH A POWER SPLIT TRANSMISSION
TRANSMISSION À DÉRIVATION DE PUISSANCE, PROCÉDÉ DE FONCTIONNEMENT D'UNE TRANSMISSION À DÉRIVATION DE PUISSANCE, AINSI QUE VÉHICULE AUTOMOBILE DOTÉ D'UNE TRANSMISSION À DÉRIVATION DE PUISSANCE

(43) Veröffentlichungstag der Anmeldung: 22.03.2023
(73) Patentinhaber: Dziuba Gears GmbH, 78647 Trossingen (DE)
(72) Erfinder: Häglsperger, Josef, 78647 Trossingen (DE); Reinhard, Christoph, 78647 Trossingen (DE); Bauer, Josef, 78647 Trossingen (DE); Honzek, Robert, 87647 Oberthingau (DE)
(74) Vertreter: Hentrich Patent- & Rechtsanwaltspartnerschaft mbB

(56) Entgegenhaltungen:
- WO-A1-2016/102572
- DE-A1- 102010 003 944
- US-B1- 7 892 130

## Beschreibung

Die Erfindung betrifft ein Leistungsverzweigungsgetriebe für ein Kraftfahrzeug, mit einer Antriebswelle, mit einem ersten, mechanischen Zweig, der eine Planetengetriebeanordnung mit zumindest zwei Sonnenrädern, nämlich einem großen Sonnenrad und einem, im Vergleich zum großen Sonnenrad kleinen Sonnenrad, einem ersten Hohlrad und einem Planetensteg umfasst, auf dem Doppelplanetenräder angeordnet sind, die mit den Sonnenrädern und mit dem ersten Hohlrad kämmen, wobei zumindest eines der Sonnenräder mit der Antriebswelle gekoppelt ist, mit einem stufenlos verstellbaren zweiten Zweig, der zumindest teilweise über die Planetengetriebeanordnung mit dem ersten, mechanischen Zweig verbindbar ist und wenigstens zwei verstellbare Hydroeinheiten umfasst, die miteinander energetisch koppelbar und in jeweils beide Richtungen als Motor oder Pumpe betreibbar sind, wobei die erste Hydroeinheit über ein Erste-Hydroeinheit-Zahnrad und ein Erstes-Hohlrad-Außenkranz-Zahnrad von dem ersten Hohlrad an einem Außenkranz des Hohlrades mit diesem Hohlrad gekoppelt ist, und mit einer Abtriebswelle, welche über den ersten, mechanischen Zweig und den zweiten Zweig mit der Antriebswelle koppelbar ist, wobei der Planetengetriebeanordnung ein Planetenwendegetriebe zugeordnet ist, durch das die Drehrichtung des ersten, mechanischen Zweiges umkehrbar ist. Das Planetenwendegetriebe weist eine axial verstellbare Schaltmuffe auf, die als ein Wende-Hohlrad gebildet ist,, und die in einer ersten Axialstellung die Drehrichtung des Planetenstegs direkt auf einen Wendeplaneten überträgt, der in dem ersten, mechanischen Zweig mittels drei Zahnräder, nämlich ein einer Koppelwelle zugeordnetes Zahnrad, ein Zahnrad des mechanischen Zweiges und ein benachbartes Zahnrad mit einer Summierwelle kraftschlüssig verbunden ist, und die in einer zweiten Axialstellung gegenüber einem Getriebegehäuse des Leistungsverzweigungsgetriebes unmittelbar oder mittelbar gegen Verdrehung blockiert ist, sodass die Drehrichtung des Planetenstegs in dieser Axialstellung gewendet wird und mit umgedrehten Drehsinn auf die Summierwelle wirkt, über die die Kraft des ersten mechanischen Zweiges und des zweiten hydrostatischen Zweiges zusammengeführt wird.

Darüber hinaus betrifft die Erfindung Verfahren zum Betrieb eines Leistungsverzweigungsgetriebes sowie ein Kraftfahrzeug mit einem Leistungsverzweigungsgetriebe.

Bei dem Einsatz von Verbrennungsmotoren in Kraftfahrzeugen ist es erforderlich, diese mit Getrieben zu koppeln, um die Verbrennungsmotoren auch für einen großen Geschwindigkeitsbereich in ihren günstigen Betriebspunkten betreiben zu können. Beispielhaft kann diesbezüglich auf Traktoren für den landwirtschaftlichen Betrieb verwiesen werden, bei denen für den Anwendungsfall der Pflanzung per Hand die Geschwindigkeit auf dem Feld zum Teil nur 0,4 km/h erreichen darf, während für den Transfer zwischen dem Feld und dem landwirtschaftlichen Betrieb Geschwindigkeiten von 60 km/h oder höher gewünscht sind. Bei Getrieben mit einer gegebenen Anzahl von Gängen ist der Betrieb des Motors in seinem optimalen Bereich nicht durchgehend gewährleistet, sodass sehr früh das Bedürfnis aufkam, eine kontinuierliche Änderung des Übersetzungsverhältnisses zu erzielen, um eine Fahrzeuggeschwindigkeit unabhängig von der Motordrehzahl anbieten zu können.

In der WO 2006/042434 A1 ist dafür ein Leistungsverzweigungsgetriebe offenbart, dass für die Verwendung in landwirtschaftlichen Fahrzeugen geeignet ist, wobei zwischen der mit dem Verbrennungsmotor gekoppelten Antriebswelle und einer Abtriebswelle ein Stufenplanetengetriebe zur Aufteilung der an der Antriebswelle anstehenden Leistung auf einen mechanischen Leistungszweig und einen hydraulischen Leistungszweig vorgesehen ist. Der hydraulische Leistungszweig ist durch zwei hydraulisch miteinander in Verbindung stehende, gleichartige hydrostatische Axialkolbenmaschinen gebildet, welche wahlweise als Pumpe oder Motor betreibbar und in einem vorgegebenen Schwenkwinkelbereich verschwenkbar sind. Die beiden hydrostatischen Axialkolbenmaschinen sind als Hydroeinheiten zur Abdeckung unterschiedlicher Fahrbereiche beziehungsweise Fahrstufen jeweils über zwei Kupplungen auf unterschiedliche Weise mit der Antriebswelle bzw. dem Stufenplanetengetriebe verbindbar. Die beiden Hydroeinheiten sind als Weitwinkelhydrostaten ausgestaltet.

Diese Druckschrift kann als Referenz für die Kenntnisse des Durchschnittsfachmannes herangezogen werden, da in dieser Druckschrift detailliert die Funktionsweise des Leistungsverzweigungsgetriebes sowie der darin eingesetzten Weitwinkelhydrostaten erläutert ist.

Als nachteilig zeigt sich bei diesem Leistungsverzweigungsgetriebe allerdings, dass die Rückwärtsfahrt einen schlechten Wirkungsgrad aufweist. In der WO 2016/102572 A1 ist daher zwischen der Antriebswelle und der Abtriebswelle eine Reversierstufe zum Wechseln zwischen einem Vorwärts-Fahrbereich und einem Rückwärts-Fahrbereich vorgesehen, wobei die Reversierstufe die Drehrichtungen der Sonnenräder des Hohlrads und der Stegwelle der Planetengetriebeanordnung beim Wechseln zwischen dem Vorwärts-Fahrbereich und dem Rückwärts-Fahrbereich entweder alle umkehrt oder alle konstant hält. Beim Wechseln zwischen Vorwärts-Fahrbereich und Rückwärts-Fahrbereich werden also die relativen Drehrichtungen der Sonnenräder, des Hohlrads und der Stegwelle in einer Gleichsinnigkeit gehalten, sodass nicht Einzelkomponenten der Planetengetriebeanordnung reversiert werden, während andere Komponenten nicht reversiert werden, sodass ausgeschlossen ist, dass es beim Wechsel zwischen Vorwärts- und Rückwärts-Fahrbereich in der Planetengetriebeanordnung zu Drehrichtungsüberlagerungen kommt. Die Reversierstufe umfasst dabei zwischen einer Abtriebsseite der Planetengetriebeanordnung und der Abtriebswelle zwei Kupplungselemente, wobei im Vorwärts-Fahrbereich Drehmoment über das erste Kupplungselement und im Rückwärts-Fahrbereich Drehmoment über das zweite Kupplungselement übertragen wird.

Aus der US 7 892 130 B1 und der DE 10 2010 003 944 A1 ist ein Leistungsverzweigungsgetriebe mit den Merkmalen des Oberbegriffs von Anspruch 1 bekannt, bei denen ein Planetenwendegetriebe zur Umkehrung der Drehrichtung des ersten, mechanischen Zweiges genutzt wird.

Aufgabe der vorliegenden Erfindung ist es, ein Leistungsverzweigungsgetriebe bereitzustellen, dessen Aufbau vereinfacht und kompakt ist sowie abtriebsseitig der Planetengetriebeanordnung ohne Kupplungen auskommt. Aufgabe ist weiterhin, ein verbessertes Kraftfahrzeug sowie jeweils ein Verfahren zum Betrieb eines in Vorwärts- und Rückwärts-Fahrbetrieb betreibbaren Leistungsverzweigungsbetriebes sowohl für den Rückwärts-Fahrbereich als auch für den Vorwärts-Fahrbereich bereitzustellen.

Diese Aufgabe wird durch ein Leistungsverzweigungsgetriebe mit den Merkmalen des Anspruchs 1, durch ein Kraftfahrzeug mit den Merkmalen des Anspruchs 10 und durch Verfahren zum Betrieb eines Leistungsverzweigungsgetriebes mit den Merkmalen des Anspruchs 11 und des Anspruchs 13 gelöst. Vorteilhafte Ausgestaltungen mit zweckmäßigen Weiterbildungen der Erfindung sind in den abhängigen Ansprüchen angegeben.

Das eingangs genannte Leistungsverzweigungsgetriebe zeichnet sich dadurch aus, dass die Drehrichtungen der Komponenten der Planetengetriebeanordnung mit ihren Sonnenrädern, dem Hohlrad und der Stegwelle sowohl für den Vorwärtsfahrbereich als auch für den Rückwärtsfahrbereich beibehalten bleibt und ein Planetenwendegetriebe genutzt wird, um die Drehrichtung der Planetengetriebeanordnung beim Wechsel zwischen dem Vorwärts-Fahrbereich und dem Rückwärts-Fahrbereich umzukehren, sodass die Abtriebswelle mit dem richtigen Drehsinn angetrieben wird. Es ist nicht erforderlich, dafür Kupplungen einzusetzen, was die Komplexität des Leistungsverzweigungsgetriebes reduziert, die Anwendung vereinfacht und auch Bauraum einspart, sodass ein einfaches und kompaktes Leistungsverzweigungsgetriebe vorliegt, bei dem der Rückwärts-Fahrbereich gleichwertig zum Vorwärts-Fahrbereich angetrieben wird, ohne dass Blindleistung anfällt.

Da das Planetenwendegetriebe eine axial verstellbare Schaltmuffe aufweist, wird die Kompaktheit des Aufbaus gefördert.

Die Schaltmuffe ist als ein Wende-Hohlrad gebildet mit einem Wendeplaneten mit einer zugeordneten ungeraden Anzahl von Zahnrädern. Nach einer vorteilhaften Ausgestaltung ist das radial innenliegende Zahnrad des Wendeplanetens durch die Koppelwelle mit dem ersten, mechanischen Zweig drehfest verbunden ist. Es liegt damit ein sehr kompakter Aufbau vor, wobei in der einen Axialstellung der Schaltmuffe diese durch Festlegung gegenüber dem Getriebegehäuse gegen Verdrehung gesichert ist und damit das in Kontakt mit der als Wende-Hohlrad gebildeten Schaltmuffe liegende Zahnrad an dem Wende-Hohlrad abläuft und damit die Drehrichtung umgekehrt wird gegenüber dem anderen Fall in der anderen Axialstellung, wenn das Wende-Hohlrad in eine gegenüber dem Planetensteg drehfest festgelegten Position insgesamt mit der Planetengetriebeanordnung als Block umläuft.

Nach einer vorteilhaften Ausgestaltung ist es weiterhin vorgesehen, dass die Koppelwelle als Hohlwelle ausgebildet ist und eine mit der Antriebswelle verbundene Zapfwelle umgibt.

Nach einer vorteilhaften Ausgestaltung ist es auch vorgesehen, dass der erste, mechanische Zweig in Richtung des Kraftflusses nach dem Planetenwendegetriebe und der zweite Zweig über eine erste Kupplung mit einer Summierwelle verbunden beziehungsweise verbindbar ist, die mit der Abtriebswelle verbunden ist. Auf diese Weise ist die Nutzung des hydrostatischen Zweiges des Leistungsverzweigungsgetriebes sichergestellt, wobei auch hier wiederum darauf hinzuweisen ist, dass über die Summierwelle die Kraft des mechanischen Zweiges und des hydrostatischen Zweiges zusammengeführt wird, wobei zwar in konventioneller Weise dem hydrostatischen Zweig eine Kupplung zugeordnet ist, aber abtriebsseitig der Planetengetriebeanordnung durch das Planetenwendegetriebe keine Kupplung erforderlich ist, um den Kraftfluss zur Summierwelle zu ermöglichen, also die Kraftübertragungskette zwischen der Summierwelle und der Abtriebswelle frei von Kupplungselementen gebildet ist, sodass auch in diesem Bereich ein sehr kompakter Aufbau vorliegt.

Nach einer vorteilhaften Ausgestaltung ist der erste, mechanische Zweig abtriebsseitig der Koppelwelle über eine ungerade Anzahl von Zahnrädern mit der Summierwelle verbunden. Vorteilhaft ist weiterhin, wenn dem zweiten Zweig eine zweite Kupplung zugeordnet ist, da so ein zweiter Fahrbereich bereitgestellt werden kann, bei dem der Summierwelle nur über das Planetengetriebe Leistung zugeführt wird.

Vorzugsweise ist die erste Kupplung als eine der Summierwelle zugeordnete Klauenkupplung ausgebildet zum lösbaren Zusammenwirken mit einer Hydrostatwelle der zweiten Hydroeinheit.

Wenn die zweite Kupplung der Hydrostatwelle der zweiten Hydroeinheit zugeordnet und als Doppelklauenkupplung ausgebildet ist zum Zusammenwirken der zweiten Hydrostateinheit über ein erstes Zahnradvorgelege mit dem kleinen Sonnenrad in der ersten geschlossenen Stellung und zum Zusammenwirken über ein zweites Zahnradvorgelege mit dem kleinen Sonnenrad in der zweiten geschlossenen Stellung, dann liegen gleichwertige Verhältnisse für den Vorwärts-Fahrbereich und den Rückwärts-Fahrbereich vor, die jeweils in zwei Stufen mit dem gleichen Geschwindigkeitsbereich betrieben werden können.

In der zweiten Stufen kann zur Erweiterung des Einsatzbereiches des Leistungsverzweigungsgetriebes eine zusätzliche Getriebestufe bereit gestellt werden, indem zwischen dem der Koppelwelle zugeordneten Zahnrad und dem diesen benachbarten Zahnrad die zusätzliche Getriebestufe angeordnet ist, wobei das der Koppelwelle zugeordnete Zahnrad und ein der Koppelwelle zugeordnetes erstes Ergänzungszahnrad jeweils über zwei Kupplungen mit einem zweiten Ergänzungszahnrad und ein drittes Ergänzungszahnrad lösbar mit dem benachbarten Zahnrad koppelt.

Ein Verfahren zum Betrieb eines derartigen Leistungsverzweigungsgetriebes ist dadurch gekennzeichnet, dass in einem Vorwärts-Fahrbereich die Schaltmuffe in eine gegenüber dem Planetensteg drehfest festgelegten Axialstellung verstellt wird, dass die erste Hydroeinheit über ein Erste-Hydroeinheit-Zahnrad und einem Erstes-Hohlrad-Außenkranz-Zahnrad an einem Außenkranz des Hohlrades mit diesem Hohlrad gekoppelt ist, dass die zweite Hydroeinheit über die erste Kupplung, ein Zahnrad-Z9 und ein Zahnrad-Z10 mit der Summierwelle gekoppelt ist, dass die erste Hydroeinheit aus einer Schwenklage mit einem Schwenkwinkel 0° in eine erste Schwenkrichtung in eine positiven Winkelbereich verschwenkt und als Pumpe betrieben wird, und dass die zweite Hydroeinheit als Motor betrieben wird. In dieser Konfiguration mit der Durchführung der Verfahrensschritte erfolgt ein Anfahren in Vorwärtsrichtung in einer Stufe 1, wobei der hydrostatisch übertragene Anteil anfänglich bei 100 % liegt und dann bis auf 0 % zurückgeht, bis die erste Hydroeinheit ihren maximalen Schwenkwinkel erreicht hat und die zweite Hydroeinheit auf 0° zurückgeschwenkt ist.

Dann ist auch die Durchführung von Verfahrensschritten möglich, bei denen in einer zweiten Stufe des Vorwärts-Fahrbereiches die erste Hydroeinheit als Motor und die zweite Hydroeinheit als Pumpe betrieben wird, wobei die zweite Hydroeinheit über eine zweite Kupplung und ein erstes Zahnradvorgelege mit dem Sonnenrad gekoppelt ist und aus einer Schwenklage von 0° in einen negativen Winkelbereich verschwenkt und die erste Hydroeinheit aus ihren maximalen Schenkwinkel auf 0° zurückgeschwenkt wird.

Weiterhin vorgesehen ist ein Verfahren zum Betrieb eines Leistungsverzweigungsgetriebes, bei dem in einem Rückwärts-Fahrbereich die Schaltmuffe in die Axialstellung verstellt wird, in der die Schaltmuffe gegenüber dem Getriebegehäuse drehfest festgelegt ist, wobei die erste Hydroeinheit als Pumpe und die zweite Hydroeinheit als Motor betrieben wird, und wobei die erste Hydroeinheit aus einer Schwenklage von 0° in eine zweite Schwenkrichtung in einen negativen Winkelbereich verschwenkt wird, sodass die Drehrichtung der zweiten Hydroeinheit sich umkehrt. Der Summierwelle wird damit sowohl über den ersten, mechanischen Zweig als auch den zweiten, hydrostatischen Zweig Drehmoment mit dem richtigen Drehsinn übertragen.

Auch für den Rückwärts-Fahrbereich ist die Durchführung von Verfahrensschritten möglich, bei denen in einer zweiten Stufe des Rückwärts-Fahrbereiches die erste Hydroeinheit als Motor und die zweite Hydroeinheit als Pumpe betrieben wird, wobei die zweite Hydroeinheit über eine zweite Kupplung und ein zweites Zahnradvorgelege mit dem Sonnenrad gekoppelt ist und aus einer Schwenklage von 0° in einen negativen Winkelbereich verschwenkt wird.

Im Ergebnis sind bei dem Leistungsverzweigungsgetriebe der Vorwärts-Fahrbereich und der Rückwärts-Fahrbereich gleichwertig gebildet, da durch das Planetenwendegetriebe die Drehrichtung des mechanischen Leistungszweiges umgedreht wird. Beide Fahrbereiche sind mit jeweils zwei Fahrstufen gebildet, die gegebenenfalls bedarfsweise durch eine weitere Getriebestufe noch ergänzt werden können. In der ersten Stufe beträgt sowohl in der Vorwärtsfahrt als auch in der Rückwärtsfahrt der hydrostatische Leistungsanteil im Anfahrpunkt 100 % und sinkt mit zunehmender Geschwindigkeit bis auf 0 % ab, wobei der hydraulische Leistungszweig und der mechanische Leistungszweig über die Summierwelle zusammengeführt werden. In der zweiten Stufe werden der hydraulische Leistungszweig und der mechanische Leistungszweig in der Planetengetriebeanordnung zusammengeführt, wobei der hydraulische Leistungsanteil zwischen 0 % und 29 % liegt.

Die vorstehend genannten Vorteile und Wirkungen gelten sinngemäß auch für ein Kraftfahrzeug mit einem derartigen Leistungsverzweigungsgetriebe. Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Figur 1: eine modellhafte Darstellung des erfindungsgemäßen Leistungsverzweigungsgetriebes,
- Figur 2: eine Ansicht von oben einer konstruktiven Ausgestaltung der modellhaften Darstellung des Leistungsverzweigungsbetriebes aus Figur 1,
- Figur 3: eine Seitenansicht des Leistungsverzweigungsgetriebes aus Figur 2, im Bereich der Planetengetriebeanordnung teilweise geschnitten dargestellt,
- Figur 4: eine Ansicht aus Richtung des Pfeiles IV aus Figur 2, im Bereich des zweiten Hohlrades des Planetenwendegetriebes teilweise geschnitten dargestellt,
- Figur 5: eine Ansicht aus Richtung des Pfeiles V aus Figur 2, im Bereich einer der Abtriebswelle zugeordneten Differentialsperre teilweise geschnitten dargestellt,
- Figur 6: eine der Figur 1 entsprechende Darstellung, mit der für das Anfahren in einem Vorwärts-Fahrbereich entsprechenden Schwenkwinkel der beiden Hydroeinheiten und die symbolische Darstellung des Kraftflusses in den geschlossenen Kraftübertragungsketten, mit der strichlierten Darstellung für die Leistung am Getriebeeingang mit der Antriebswelle, der gepunkteten Darstellung für die hydraulisch übertragene Leistung, der strichpunktierten Darstellung für die mechanisch übertragene Leistung und der durchgezogenen Darstellung für die Leistung am Getriebeausgang mit der Abtriebswelle,
- Figur 7: in den Teildarstellungen a), b) und c) eine Symbolisierung des Anfahrvorganges aus der in Figur 6 gezeigten Anfangsstellung,
- Figur 8: eine der Figur 6 entsprechende Darstellung des Zustandes gemäß der Figur 7c) für den Vorwärts-Fahrbereich beim Übergang aus der ersten Stufe in die zweite Stufe,
- Figur 9: eine der Figur 7 entsprechende Darstellung mit dem Ausgangszustand in a) beim Übergang aus der ersten Stufe in die zweite Stufe,
- Figur 10: eine der Figur 6 entsprechende Darstellung mit der für das Anfahren in einem Rückwärts-Fahrbereich entsprechenden Schwenkwinkel der beiden Hydroeinheiten und die symbolische Darstellung des Kraftflusses in den geschlossenen Kraftübertragungsketten, mit der gegenüber Figur 6 für den Rückwärts-Fahrbereich geschalteten Schaltmuffe des Planetenwendegetriebes,
- Figur 11: eine der Figur 7 entsprechende Darstellung für den Anfahrvorgang in Rückwärtsrichtung,
- Figur 12: eine der Figur 9 entsprechende Darstellung für den Rückwärts-Fahrbereich mit dem Ausgangszustand in a) beim Übergang aus der ersten Stufe in die zweite Stufe,
- Figur 13: eine der Figur 6 entsprechende symbolische Darstellung des Kraftflusses im Zustand gemäß der Figur 12b),
- Figur 14: das Getriebeschema des Leistungsverteilungsgetriebes aus Figur 1,
- Figur 15: eine der Figur 14 entsprechende Darstellung mit einer zwei Lamellenkupplungen aufweisenden zusätzlichen Getriebestufe zur Bereitstellung einer weiteren Stufe,
- Figur 16: für den Vorwärts-Fahrbereich: in der Teildarstellung a) eine der Figur 9b) entsprechende Darstellung mit der zusätzlichen Getriebestufe und in der Teildarstellung b) eine der Figur 9c) entsprechende Darstellung mit der zusätzlichen Getriebestufe,
- Figur 17: eine der Figur 6 entsprechende symbolische Darstellung des Kraftflusses in den geschlossenen Kraftübertragungsketten gemäß der Figur 16a),
- Figur 18: für den Rückwärts-Fahrbereich: in der Teildarstellung a) eine der Figur 12b) entsprechende Darstellung mit der zusätzlichen Getriebestufe und in der Teildarstellung b) eine der Figur 12c) entsprechende Darstellung mit der zusätzlichen Getriebestufe,
- Figur 19: eine der Figur 6 entsprechende symbolische Darstellung des Kraftflusses in den geschlossenen Kraftübertragungsketten gemäß der Figur 18a),
- Figur 20: eine der Figur 1 entsprechende Darstellung einer Ausführungsform mit als Lamellenkupplungen ausgebildeter erster Kupplung und zweiter Kupplung, und
- Figur 21: eine geschwindigkeitsabhängige Darstellung des hydrostatischen Leistungsanteils (strichliert) sowie der Effizienz.

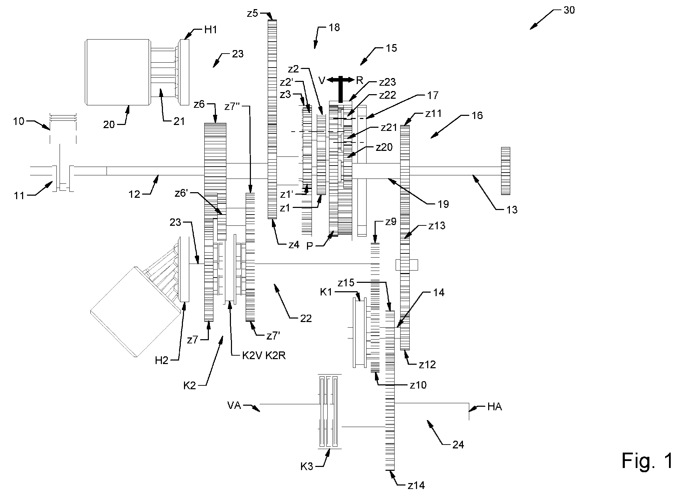

In Figur 1 ist modellhaft die dreidimensionale Darstellung eines Leistungsverzweigungsgetriebes 30 gezeigt, das mit seiner Antriebswelle 12 mit einem Verbrennungsmotor gekoppelt ist, der durch einen mit einer Kurbelwelle 11 verbundenen Kolben 10 symbolisiert ist. Die Verbindung der Antriebswelle 12 mit dem Verbrennungsmotor kann dabei auch über einen nicht in der Zeichnung dargestellten Torsionsdämpfer und eine nicht dargestellte Gelenkwelle erfolgen.

Die Antriebswelle 12 ist mit einer sich durch das Leistungsverzweigungsgetriebe 30 hindurch erstreckenden Zapfwelle 13 verbunden, mit der weitere Komponenten angetrieben werden können. Wird beispielsweise das Leistungsverzweigungsgetriebe 30 in einem als Traktor für den landwirtschaftlichen Betrieb ausgelegten Kraftfahrzeug eingesetzt, so kann über die Zapfwelle 13 eine Pumpe für die Arbeitshydraulik und eine weitere Pumpe für die Lenkung angetrieben werden, das Antreiben anderer Aggregate ist gleichfalls möglich.

Das Leistungsverzweigungsgetriebe 30 weist eine Planetengetriebeanordnung 18 auf mit einem großen Sonnenrad Z1 und einen kleinen Sonnenrad Z1'. Weiterhin liegen Doppelplanetenräder Z2 und Z2', ein erstes Hohlrad Z3 und ein Planetensteg P vor. Über diese Planetengetriebeanordnung 18 läuft ein erster, mechanischer Zweig 16, durch den von dem Verbrennungsmotor über die Antriebswelle 12 bereitgestellte Leistung einer Summierwelle 14 und von dieser einer Abtriebswelle 24 zugeführt werden kann.

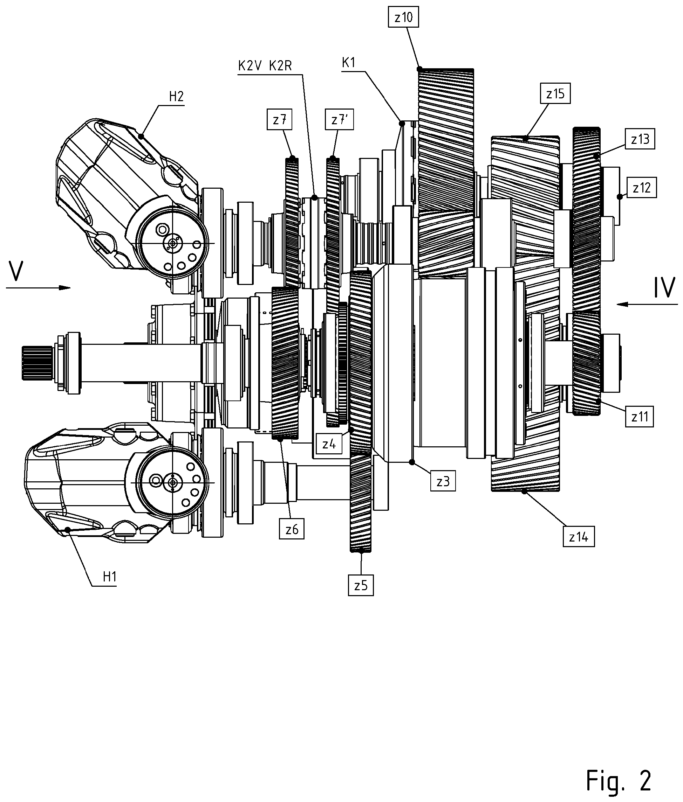

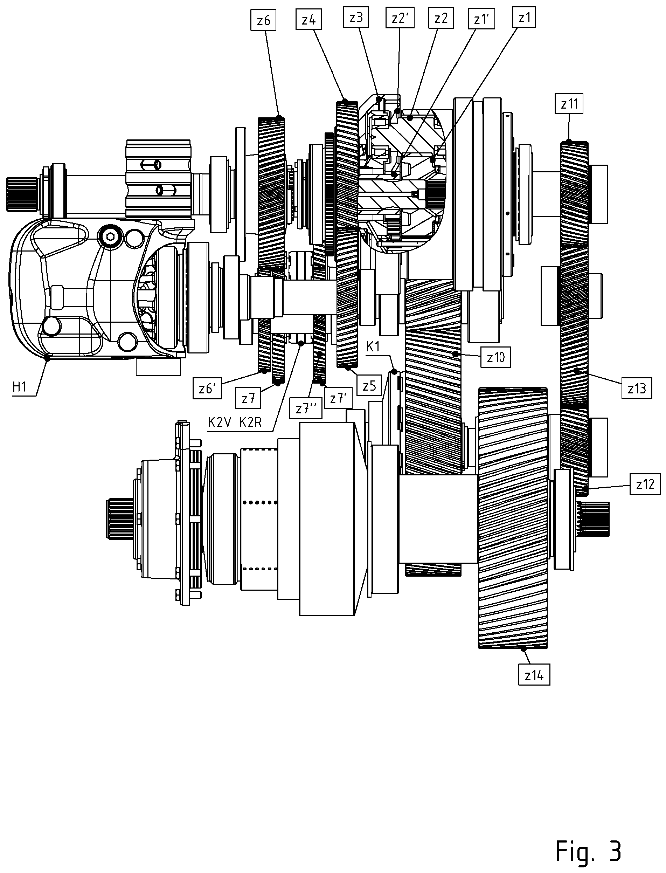

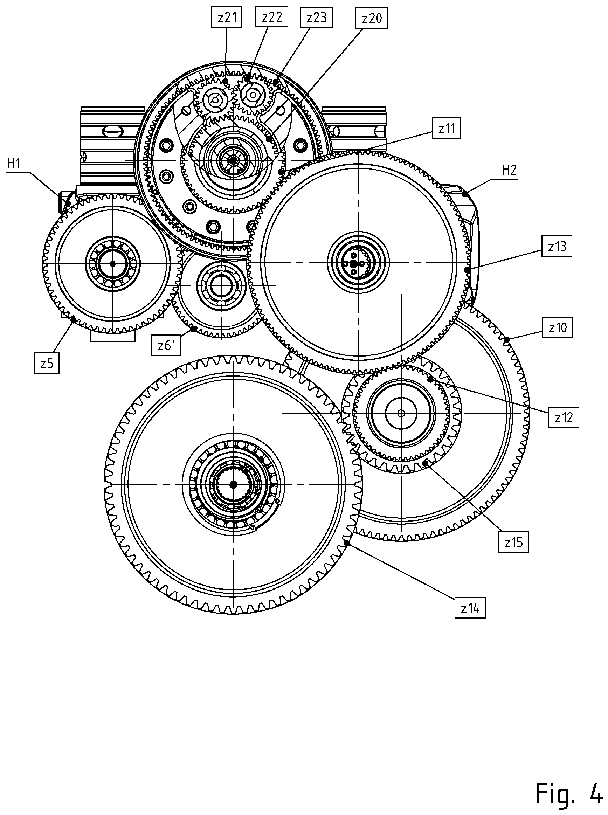

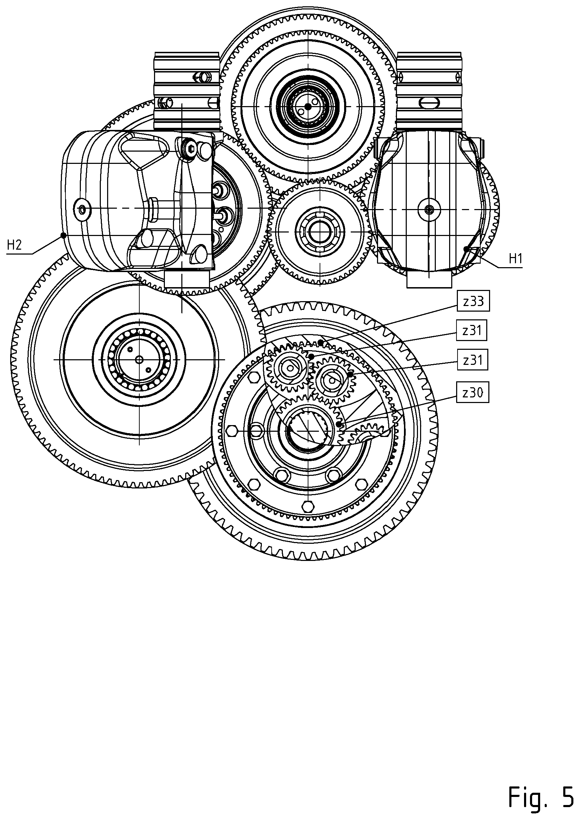

In den Figuren 2 bis 5 ist die konstruktive Umsetzung der schematischen Darstellung des Leistungsverzweigungsgetriebes 30 aus Figur 1 gezeigt.

Als eine Besonderheit des Leistungsverzweigungsgetriebes 30 ist dabei für einen einfachen Wechsel zwischen einem Vorwärts-Fahrbereich V und einem Rückwärts-Fahrbereich R ein Planetenwendegetriebe 15 abtriebsseitig der Planetengetriebeanordnung 18 vorgesehen. Durch dieses Planetenwendegetriebe 15 ist die Drehrichtung des ersten, mechanischen Zweiges 16 umkehrbar. Das Planetenwendegetriebe 15 umfasst eine als ein Wende-Hohlrad gebildete, axial verstellbare Schaltmuffe Z23, die in einer ersten Axialstellung die Drehrichtung des Planetenstegs P direkt auf einen Wendeplaneten Z22, Z21,Z20 überträgt, der über in dem ersten, mechanischen Zweig 16 mittels drei Zahnrädern Z11, Z12 und Z13 mit der Summierwelle 14 kraftschlüssig verbunden ist.

In einer zweiten Axialstellung ist die Schaltmuffe Z23 gegenüber einem Getriebegehäuse 17 des Leistungsverzweigungsgetriebes 30 unmittelbar oder mittelbar gegen Verdrehung blockiert, sodass die Drehrichtung des Planetenstegs P in dieser Axialstellung gewendet wird und mit umgedrehtem Drehsinn auf die Summierwelle 14 wirkt. Für diesen Zweck weist die Schaltmuffe Z23 einen Wendeplaneten Z20, Z21, Z22 mit einer zugeordneten ungeraden Anzahl von Zahnrädern auf, wobei das radial innenliegende Zahnrad Z20 durch eine Koppelwelle19 mit dem ersten, mechanischen Zweig 16 mit den Zahnrädern Z11, Z12, Z13 drehfest verbunden ist. Die Koppelwelle 19 ist als Hohlwelle ausgebildet und umgibt die Zapfwelle 13.

Das Leistungsverzweigungsgetriebe 30 verfügt weiterhin über zwei Hydroeinheiten H1 und H2, die einen hydraulischen, stufenlos verstellbaren zweiten Zweig 22 des Leistungsverzweigungsgetriebes 30 bilden. Die beiden Hydroeinheiten H1, H2 sind hydraulisch über nicht gezeigte Hochdruckkanäle miteinander verbunden.

Die Hydroeinheiten H1 und H2 sind durch Weitwinkelhydrostaten vom Schrägachsentyp gebildet, bei dem ein Zylinderblock 20 mit darin befindlichen Kolben 21 aus der Achse der zugeordneten Hydrostatwelle 23 heraus zu einer Seite um einen Schwenkwinkel verschwenkt werden kann. Der grundsätzliche Aufbau und die Funktionsweise der Weitwinkelhydrostaten ist in der WO 2006/042434 A1 beschrieben und daraus bekannt.

Werden bei einem konstanten Schwenkwinkel ungleich 0° die Hydrostatwelle 23 und damit über eine Synchronisierwelle auch der Zylinderblock 20 um ihre jeweiligen Achsen gedreht, durchläuft jeder der Kolben 21 pro Umdrehung einen vollständigen Hubzyklus.

Eine Hydroeinheit H1, H2 kann dabei als hydraulische Pumpe PU arbeiten, wenn ein Antrieb über die Hydrostatwelle 23 erfolgt und ein hydraulisches Medium durch die aus der Zylinderbohrung herausfahrenden Kolben 21 angesaugt und durch die in die Zylinderbohrung hineinfahrenden Kolben 21 herausgedrückt wird. Die Pumpleistung in Volumen pro Umdrehung ist dabei umso größer, je größer der Schwenkwinkel ist.

Eine Hydroeinheit H1, H2 kann auch als hydraulischer Motor M arbeiten, wenn die Zylinder jeweils mit einem unter Druck stehenden hydraulischen Medium beaufschlagt werden und die entstehende Drehbewegung an der Hydrostatwelle 23 abgenommen wird. Das Drehmoment ist dabei umso grö-ßer, je größer der Schwenkwinkel ist.

Die Betriebsweise der Hydroeinheiten H1, H2 ist in den Figuren auch vermerkt; gleiches gilt auch für die Schaltstellungen V,R des Planetenwendegetriebes 15 und die Schaltstellungen K2V und K2R der Doppelklauenkupplung K2V/K2R.

Über das Erste-Hohlrad-Außenkranz-Zahnrad Z4 am Außenkranz des Hohlrades Z3 und das Erste-Hydroeinheit-Zahnrad Z5 wirkt die Antriebswelle auf die erste Hydroeinheit H1.

Die zweite Hydroeinheit H2 ist im Vorwärts-Fahrbereich V und im Rückwärts-Fahrbereich R der Stufe 1 über die erste Kupplung K1 sowie Zahnräder Z9 und Z10 mit der Summierwelle 14 gekoppelt, die über die Zahnräder Z15 und Z14 mit der Abtriebswelle 24 verbunden ist, die in dem Ausführungsbeispiel dem Antrieb einer Hinterachse HA dient und über eine dritte Kupplung K3 auch zum Antrieb einer Vorderachse VA genutzt werden kann.

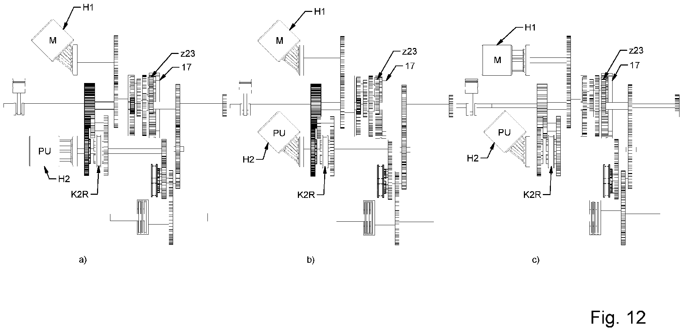

In den gezeigten Ausführungsbeispielen der Figuren 1 bis 19 ist die erste Kupplung K1 als eine der Summierwelle 14 zugeordnete Klauenkupplung ausgebildet zum lösbaren Zusammenwirken mit einer Hydrostatwelle 23 der zweiten Hydroeinheit H2. Weiterhin ist die zweite Kupplung K2 der Hydrostatwelle 23 der zweiten Hydroeinheit H2 zugeordnet und als Doppelklauenkupplung K2V/K2R ausgebildet zum Zusammenwirken der Hydrostateinheit H2 über ein erstes Zahnradvorgelege Z6,Z7 mit dem Sonnenrad Z1' in der ersten geschlossenen Stellung K2V, die dem Vorwärts-Fahrbereich zugeordnet ist, und zum Zusammenwirken über ein zweites Zahnradvorgelege Z7',Z7",Z6',Z6 mit dem Sonnenrad Z1' in der zweiten geschlossenen Stellung K2R, die dem Rückwärts-Fahrbereich zugeordnet ist.

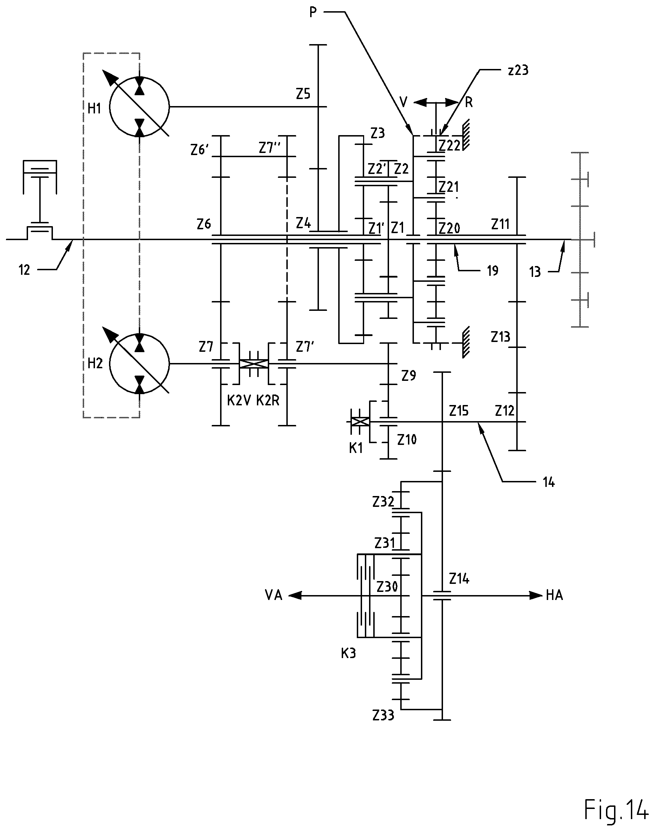

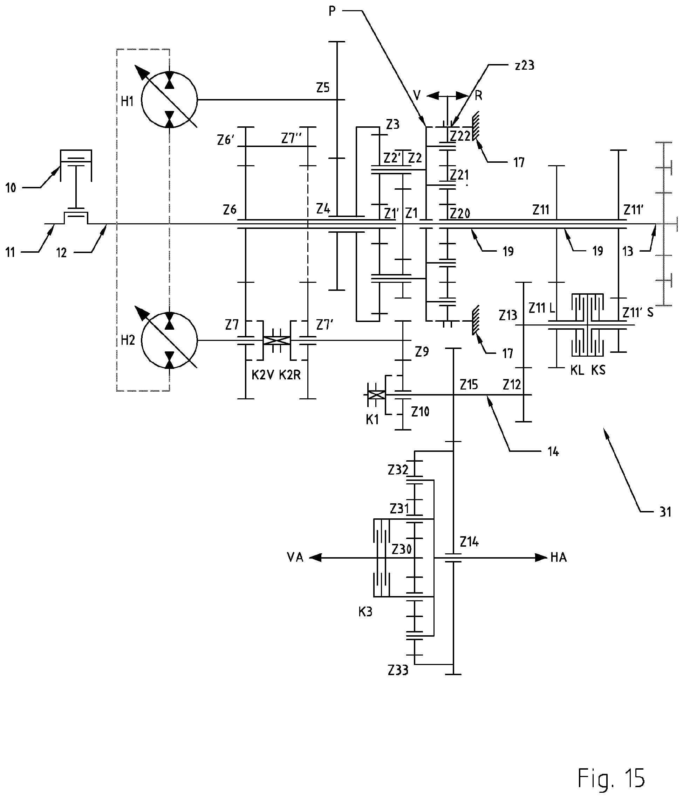

Die Figuren 15 bis 19 verweisen darauf, dass zwischen dem der Koppelwelle 19 zugeordneten Zahnrad Z11 und dem in Figur 14 benachbarten Zahnrad Z13 eine zusätzliche Getriebestufe 31 angeordnet sein kann, die ein der Koppelwelle 19 zugeordnetes erstes Ergänzungszahnrad Z11' über zwei Kupplungen KS,KL und ein zweites Ergänzungszahnrad Z11'S und ein drittes Ergänzungszahnrad Z11L lösbar mit dem benachbarten Zahnrad Z13 koppelt.

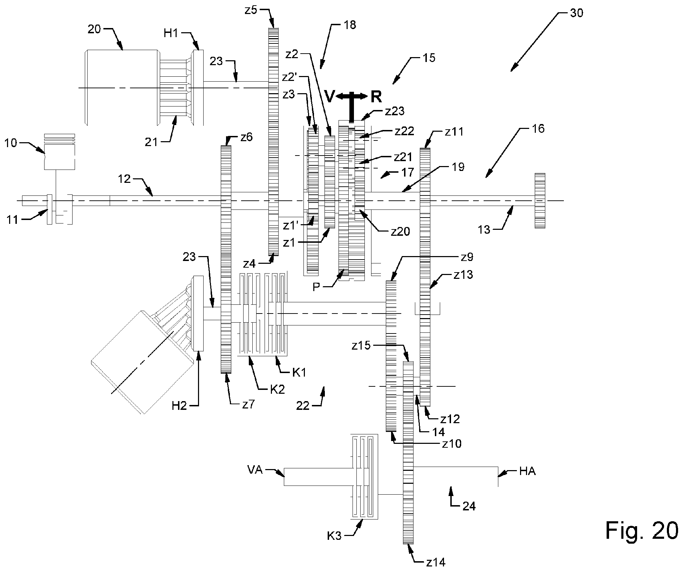

In den gezeigten Ausführungsbeispielen der Figuren 1 bis 19 sind die Kupplungen K1 und K2 als Klauenkupplungen und K3 als Lamellenkupplung gebildet, während die Figur 20 die Nutzung von Lamellenkupplungen für die Kupplungen K1 und K2 zeigt, was gleichfalls grundsätzlich möglich ist, allerdings mit dem Verlust der zweiten Stufe für den Rückwärts-Fahrbereich R verbunden ist.

Die zweite Hydroeinheit H2 ist also über die erste Kupplung K1 mit der Summierwelle 14 koppelbar und kann bei geöffneter erster Kupplung K1 mittels der zweiten Kupplung K2 über das erste Zahnradvorgelege Z6, Z7 oder das zweite Zahnradvorgelege Z7',Z7',Z6',Z6 'und dem kleinen Sonnenrad Z1' mit der Planetengetriebeanordnung 18 gekoppelt werden.

Nachfolgend werden die möglichen Betriebsweisen des Leistungsverzweigungsgetriebes 30 mit dem vorstehend geschilderten Aufbau erläutert.

Eine mögliche Betriebsweise ist der aktive Stillstand, bei der die Summierwelle 14 und darüber die Abtriebswelle 24 blockiert werden und eine Art "Feststellbremse" vorliegt. Dazu ist die zweite Hydroeinheit H2, wie in der Figur 1 dargestellt, voll ausgeschwenkt, während die erste Hydroeinheit H1 einen Schwenkwinkel von 0° aufweist. Die erste Hydroeinheit H1 fungiert als Pumpe PU und die zweite Hydroeinheit H2 als Motor M, sodass über die zweite Hydroeinheit H2 und die erste Kupplung K1 die gewünschte Blockade erreicht ist.

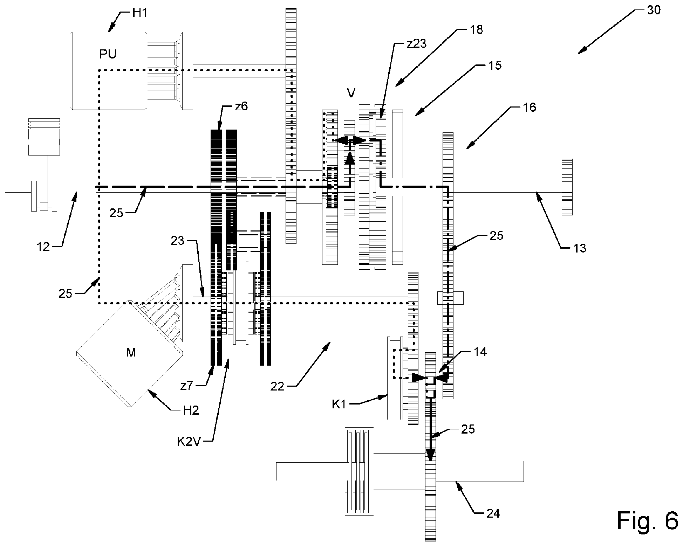

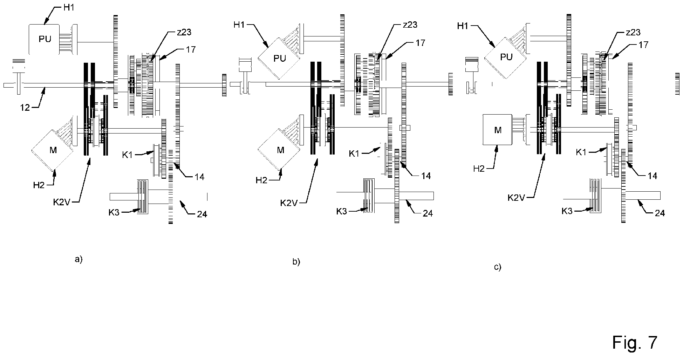

Der Vorwärts-Fahrbereich V wird anhand der Figuren 6 und 7 erläutert. Initial im Stillstand des das Leistungsverzweigungsgetriebe 30 aufweisenden Kraftfahrzeuges ist die zweite Hydroeinheit H2 voll ausgeschwenkt und die erste Hydroeinheit H1 weist einen Schwenkwinkel von 0° auf. Die erste Hydroeinheit H1 fungiert als Pumpe PU und die zweite Hydroeinheit H2 als Motor M. Beim Anfahren schwenkt die erste Hydroeinheit H1 von 0° in einen positiven Winkelbereich, in dem gezeigten Ausführungsbeispiel gegen den Uhrzeigersinn, bis zu ihrem maximalen Schwenkwinkel, der bei dem in den Zeichnungen dargestellten Ausführungsbeispiel 45° beträgt. Die hydrostatische Leistung aus der ersten Hydroeinheit H1 wird der als Motor M arbeitenden zweiten Hydroeinheit H2 zugeführt und über die erste Kupplung K1 auf die Summierwelle 14 geleitet, der über den ersten, mechanischen Zweig 16 direkt über den Planetensteg P und den Wendeplaneten Z20, Z21, Z22 gleichfalls eine Leistung mechanisch zugeführt wird (Figur 6). In Figur 6 ist auch symbolisch der Kraftfluss in den geschlossenen Kraftübertragungsketten dargestellt, wobei die strichlierte Darstellung für die Leistung am Getriebeeingang mit der Antriebswelle steht, die gepunktete Darstellung für die hydraulisch übertragene Leistung, die strich-punktierte Darstellung für die mechanisch übertragene Leistung und die durchgezogene Darstellung für die Leistung am Getriebeausgang mit der Abtriebswelle. Die Zuordnungen sind auch in den übrigen gleichartigen Darstellungen beibehalten.

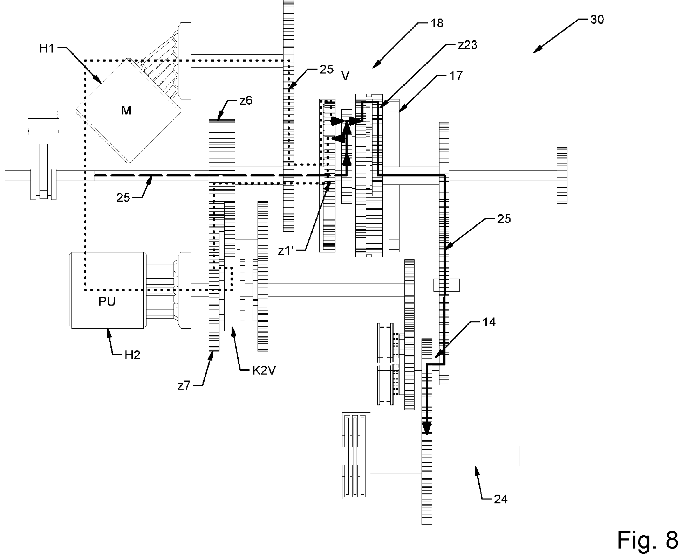

In der Figur 7b ist der Zustand gezeigt, wenn die erste Hydroeinheit H1 ihren maximalen Schwenkwinkel erreicht hat, woraufhin die zweite Hydroeinheit H2 auf einen Schwenkwinkel von 0° zurückschwenkt (Figur 7c) und damit die erste Hydroeinheit H1 zum Stillstand kommt. Die Kupplungen K1 und K2 laufen synchron und sind lastlos, woraufhin die erste Kupplung K1 geöffnet und die zweite Kupplung K2 geschlossen wird. Dadurch ist die zweite Hydroeinheit H2 über das Zahnradvorgelege Z6, Z7 an das kleine Sonnenrad Z1' der Planetengetriebeanordnung 18 gekoppelt. Der Kraftfluss in den Kraftübertragungsketten ist aus der Figur 8 ersichtlich.

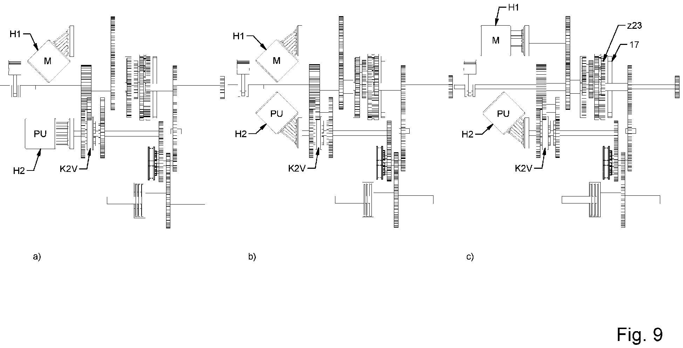

Durch Weiterschwenken der zweiten Hydroeinheit H2 in die Gegenrichtung in einen negativen Winkelbereich wird die Anströmungsrichtung der Hydroeinheiten H1 und H2 gewechselt, sodass ein Wechsel in eine Stufe 2 des Vorwärts-Fahrbereiches V erfolgt, bei dem die zweite Hydroeinheit H2 als Pumpe PU arbeitet und die erste Hydroeinheit H1 antreibt. Die hydrostatische und die mechanische Leistung werden in der Planetengetriebeanordnung 18 zusammengeführt und die hydrostatisch übertragene Leistung nimmt zu. Ist die zweite Hydroeinheit H2 voll ausgeschwenkt, schwenkt die erste Hydroeinheit H1 auf 0° zurück (Figur 9c), wodurch die zweite Hydroeinheit H2 nahezu stillsteht und die Kraftübertragung fast rein mechanisch über den ersten, mechanischen Zweig 16 verläuft.

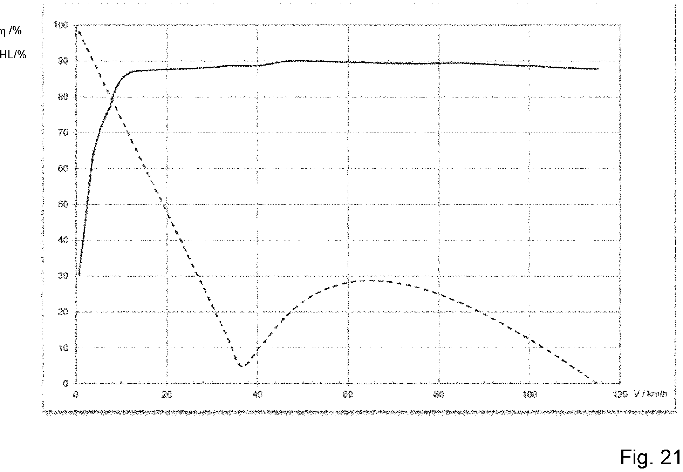

In der Figur 21 ist der hydrostatische Leistungsanteil HL in Abhängigkeit der Geschwindigkeit dargestellt. Es ist ersichtlich, dass beim Anfahren der hydrostatische Leistungsanteil HL bei 100 % liegt und dann nahezu linear auf 0 % abfällt, wobei dann das Umschalten von der ersten Stufe in die zweite Stufe des Vorwärts-Fahrbereiches V erfolgt, woraufhin der hydrostatische Leistungsanteil HL wieder zunimmt bis ca. 29 Prozent und nach diesem Maximum wieder abfällt, bis schließlich die Kraftübertragung rein mechanisch erfolgt. Dargestellt in der Figur 21 ist auch der Wirkungsgrad η, der nahezu über den gesamten Geschwindigkeitsbereich auf hohem Niveau nahezu konstant verharrt.

Für die Stufen 1 und 2 des Vorwärts-Fahrbereiches V sind also in den Figuren 6 und 8 der Kraftfluss 25 in den Kraftübertragungsketten dargestellt, wobei die Figur 6 die Konstellation beim Anfahren zeigt, bei der hydrostatische Leistung von der zweiten Hydroeinheit H2 über die erste Kupplung K1 der Summierwelle 14 zugeführt und mechanische Leistung von der Antriebswelle 12 über die Planetengetriebeanordnung 18 auf die Summierwelle 14 übertragen wird. Die Figur 8 zeigt den Übergang in die Stufe 2 des Vorwärtsfahrbereiches V, bei der die hydrostatische erzeugte Leistung gleichfalls der Planetengetriebeanordnung 18 und von dort der Summierwelle 14 zugeführt wird.

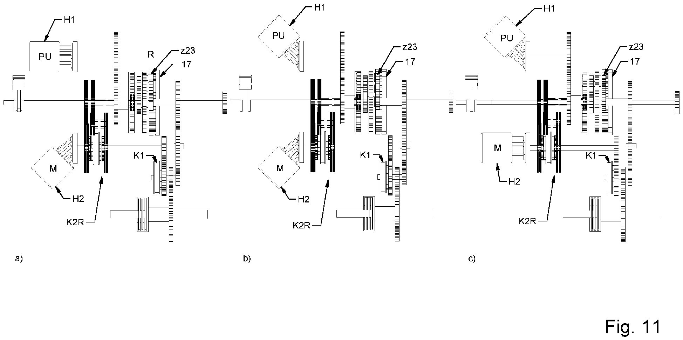

Die Figur 11 zeigt die Ausgangssituation in der Teilfigur a), wenn im Rückwärts-Fahrbereich R aus dem Stillstand angefahren wird. Für den Rückwärts-Fahrbereich R ist das Wende-Hohlrad als Schaltmuffe Z23 drehfest in der zweiten Axialstellung gegenüber dem Getriebegehäuse 17 festgelegt, sodass die Drehrichtung des Planetenstegs P umgekehrt wird. Die zweite Hydroeinheit H2 arbeitet als Motor M und ist voll ausgeschwenkt, während die erste Hydroeinheit H1 als Pumpe P wirkt und aus der Ausgangsstellung 0° im Uhrzeigersinn bis -45° schwenkt. Durch die entgegengesetzte Schwenkrichtung der ersten Hydroeinheit H1 in den negativen Winkelbereich wird die Drehrichtung der zweiten Hydroeinheit H2 umgekehrt und über die erste Kupplung K1 mit dem entsprechenden Drehsinn der Summierwelle 14 zugeführt, die den mechanischen Leistungsanteil durch das Planetenwendegetriebe 15 gleichfalls mit dem gewendeten Drehsinn erhält.

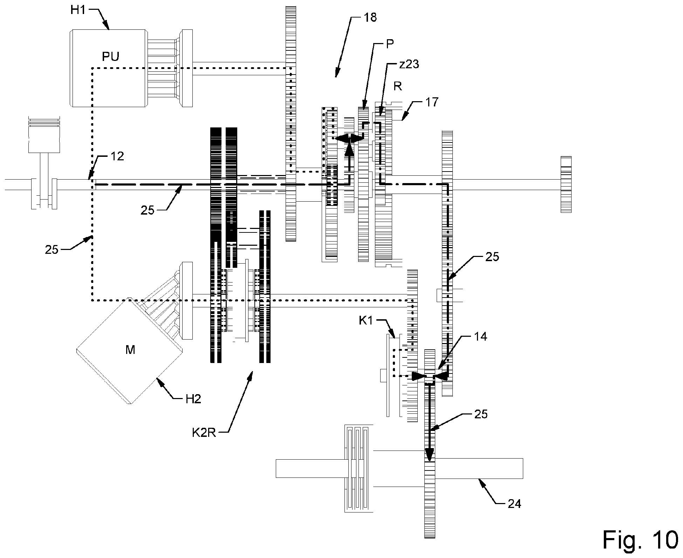

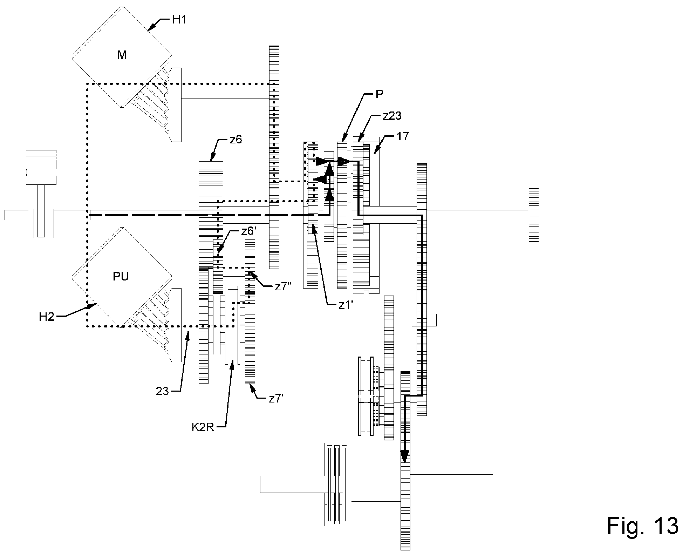

Die Kraftflüsse sind dabei aus den Figuren 10 und 13 ersichtlich, die im Vergleich mit den Figuren 6 und 8 zeigen, dass im Vorwärts-Fahrbereich V und im Rückwärts-Fahrbereich R das Zusammenführen der Leistungsanteile grundsätzlich gleich erfolgt, wobei die Figur 13 die Nutzung des zweiten Zahnradvorgeleges Z7', Z7",Z6',Z6 über die Doppelklauenkupplung K2V/K2R in der Stellung K2R zeigt.

Figur 15 zeigt eine Ausführungsform, bei der in der Stufe 2, und zwar sowohl für den Vorwärts-Fahrbereich V als auch den Rückwärts-Fahrbereich R, über die Koppelwelle 19 eine zusätzliche Getriebestufe 31 mit zwei Kupplungen KS und KL genutzt wird, um den Einsatzbereich zu erweitern. Am Ende der Stufe 2 wird die Kupplung KL geöffnet und die Kupplung KS geschlossen; in der Umschaltzeit von Kupplung KL auf Kupplung KS wird die erste Hydroeinheit H1 von 0° in Richtung 45° geschwenkt. Haben die Kupplungen KL und KS die Synchrondrehzahl erreicht, wird die erste Hydroeinheit H1 wieder auf 0° geschwenkt.

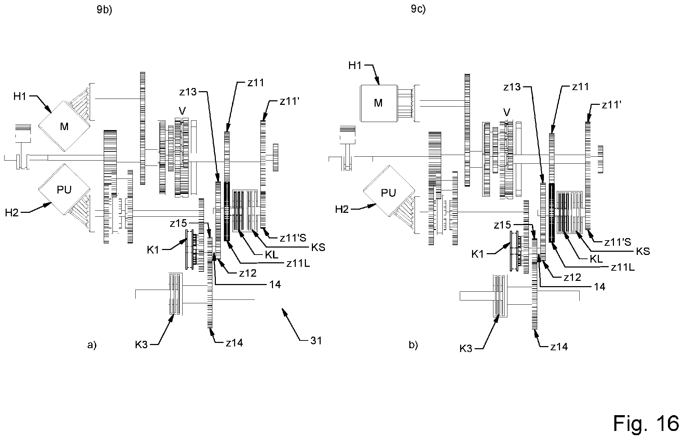

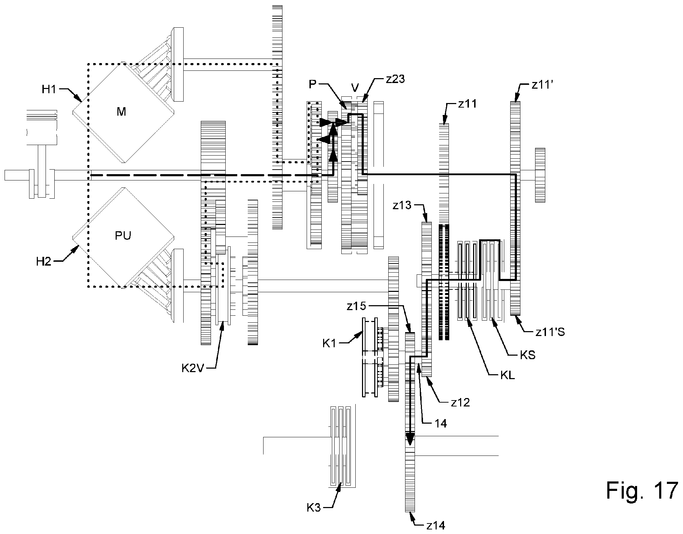

Figur 16 und Figur 17 zeigen die Nutzung der zusätzlichen Getriebestufe 31 im Vorwärts-Fahrbereich V. Am Ende der zweiten Stufe wird die Kupplung KL geöffnet und die Kupplung KS geschlossen, wobei während des Umschaltens von der Kupplung KL auf die Kupplung KS die erste Hydroeinheit H1 von 0° in Richtung 45° verschwenkt wird. Sobald die Kupplung KS und die Kupplung KL die Synchrondrehzahl erreicht haben, schwenkt die erste Hydroeinheit H1 wieder auf 0° zurück. Da die zweite Hydroeinheit H2 voll ausgeschwenkt ist, steht diese nahezu still und die Kraftübertragung erfolgt fast rein mechanisch (Figur 17).

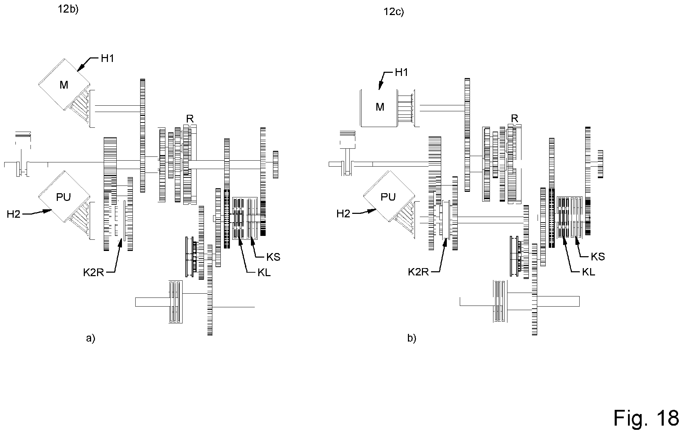

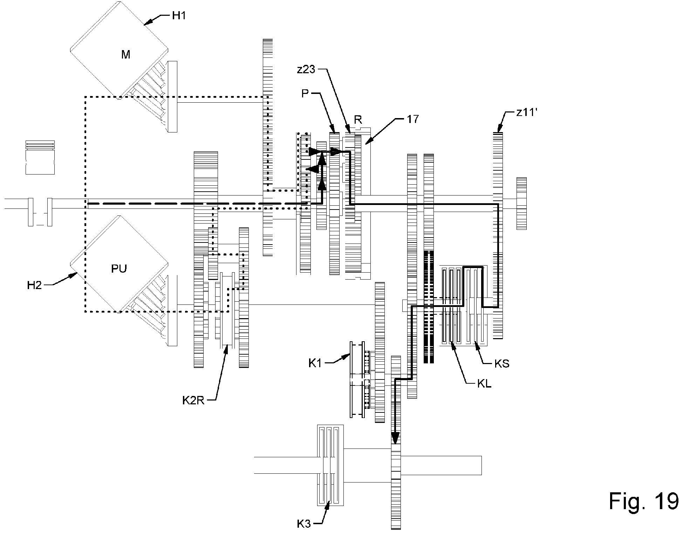

Die Figuren 18 und 19 zeigen die Verhältnisse bei Nutzung der zusätzlichen Getriebestufe 31 im Rückwärts-Fahrbereich R am Ende der zweiten Stufe, wobei zu beachten ist, dass die Schwenkrichtung der ersten Hydroeinheit H1 gegenüber dem Vorwärts-Fahrbereich V invertiert ist.

### BEZUGSZEICHENLISTE:

- 10: Kolben (Verbrennungsmotor)
- 11: Kurbelwelle
- 12: Antriebswelle
- 13: Zapfwelle
- 14: Summierwelle
- 15: Planetenwendegetriebe
- 16: erster, mechanischer Zweig
- 17: Getriebegehäuse
- 18: Planetengetriebeanordnung
- 19: Koppelwelle
- 20: Zylinderblock (Rotor)
- 21: Kolben (Hydroeinheit)
- 22: zweiter Zweig: hydraulisch
- 23: Hydrostatwelle
- 24: Abtriebswelle
- 25: Kraftfluss
- 30: Leistungsverzweigungsgetriebe
- 31: zusätzliche Getriebestufe
- K1: erste Kupplung
- K2: zweite Kupplung
- K3: dritte Kupplung
- KS: Kupplung für zusätzliche Stufe (schnell)
- KL: weitere Kupplung für zusätzliche Stufe (langsam)
- K2V/K2R: Doppelklauenkupplung
- HA: Hinterachse
- VA: Vorderachse
- HL: hydrostatischer Leistungsanteil
- η: Wirkungsgrad
- V: Vorwärts-Fahrbereich
- R: Rückwärts-Fahrbereich
- M: Motor
- PU: Pumpe
- K2V: erste geschlossene Stellung der Doppelklauenkupplung für V
- K2R: zweite geschlossene Stellung der Doppelklauenkupplung für R
- H1: erste Hydroeinheit
- H2: zweite Hydroeinheit
- P: Planetensteg
- Z1: großes Sonnenrad
- Z1': kleines Sonnenrad
- Z2: Doppelplanetenrad
- Z2': Doppelplanetenrad
- Z3: erstes Hohlrad
- Z4: Zahnrad am Außenkranz von Z3
- Z5: Zahnrad zu H1
- Z6,Z7: erstes Zahnradvorgelege
- Z7',Z7",Z6',Z6: zweites Zahnradvorgelege
- Z9,Z10: Zahnräder zwischen 23 und K1
- Z11: der Koppelwelle zugeordnetes Zahnrad
- Z12: Zahnrad des ersten, mechanischer Zweigs
- Z13: benachbartes Zahnrad
- Z11': erstes Ergänzungszahnrad
- Z11'S: zweites Ergänzungszahnrad (für schnelle Stufe)
- Z11L: drittes Ergänzungszahnrad (für langsame Stufe)
- Z20, Z21, Z22: Wendeplanet
- Z23: SchaltmuffelWende-Hohlrad
- Z30,Z31,Z32,Z33: Längsdifferential mit Sperre

## Patentansprüche

1. Leistungsverzweigungsgetriebe (30) für ein Kraftfahrzeug, mit einer Antriebswelle (12), mit einem ersten, mechanischen Zweig (16), der eine Planetengetriebeanordnung (18) mit zumindest zwei Sonnenrädern (Z1, Z1'), nämlich einem großen Sonnenrad (Z1) und einem, im Vergleich zum großen Sonnenrad (71) kleinen Sonnenrad (Z1'), einem ersten Hohlrad (Z3) und einem Planetensteg (P) umfasst, auf dem Doppelplanetenräder (Z2, Z2') angeordnet sind, die mit den Sonnenrädern (Z1, Z1') und mit dem ersten Hohlrad (Z3) kämmen, wobei zumindest eines der Sonnenräder (Z1) mit der Antriebswelle (12) gekoppelt ist, mit einem stufenlos verstellbaren zweiten Zweig (22), der zumindest teilweise über die Planetengetriebeanordnung (18) mit dem ersten, mechanischen Zweig (16) verbindbar ist und wenigstens zwei verstellbare Hydroeinheiten (H1, H2) umfasst, die miteinander energetisch koppelbar und in jeweils beide Richtungen als Motor (M) oder Pumpe (PU) betreibbar sind, wobei die erste Hydroeinheit (H1) über ein Erste-Hydroeinheit-Zahnrad (Z5) und ein Erstes-Hohlrad-Außenkranz-Zahnrad (Z4) an einem Außenkranz des Hohlrades (Z3) mit diesem Hohlrad (Z3) gekoppelt ist, und mit einer Abtriebswelle (24), welche über den ersten, mechanischen Zweig (16) und den zweiten Zweig (22) mit der Antriebswelle (12) koppelbar ist, wobei der Planetengetriebeanordnung (18) ein Planetenwendegetriebe (15) zugeordnet ist, durch das die Drehrichtung des ersten, mechanischen Zweiges (16) umkehrbar ist, **dadurch gekennzeichnet, dass** das Planetenwendegetriebe (15) eine axial verstellbare Schaltmuffe (Z23) aufweist, die als ein Wende-Hohlrad gebildet ist, , und die in einer ersten Axialstellung die Drehrichtung des Planetenstegs (P) direkt auf einen Wendeplaneten (Z22, Z21, Z20) überträgt, der in dem ersten, mechanischen Zweig (16) mittels drei Zahnräder, nämlich ein einer Koppelwelle (19) zugeordnetes Zahnrad (Z11), ein Zahnrad des ersten mechanischen Zweiges (Z12) und ein benachbartes Zahnrad (Z13) mit einer Summierwelle (14) kraftschlüssig verbunden ist, und die in einer zweiten Axialstellung gegenüber einem Getriebegehäuse (17) des Leistungsverzweigungsgetriebes (30) unmittelbar oder mittelbar gegen Verdrehung blockiert ist, sodass die Drehrichtung des Planetenstegs (P) in dieser Axialstellung gewendet wird und mit umgedrehten Drehsinn auf die eine Summierwelle (14) wirkt, über die die Kraft des ersten mechanischen Zweiges (16) und des zweiten hydrostatischen Zweiges (22) zusammengeführt wird.

2. Leistungsverzweigungsgetriebe (30) nach Anspruch 1, **dadurch gekennzeichnet, dass** das radial innenliegende Zahnrad (Z20) des Wendeplaneten (Z20, Z21, Z22) durch die Koppelwelle (19) mit dem ersten, mechanischen Zweig (16) drehfest verbunden ist.

3. Leistungsverzweigungsgetriebe (30) nach Anspruch 2, **dadurch gekennzeichnet, dass** die Koppelwelle (19) als Hohlwelle ausgebildet ist und eine mit der Antriebswelle (12) verbundene Zapfwelle (13) umgibt.

4. Leistungsverzweigungsgetriebe (30) nach einem der Ansprüche 1 bis 3, **dadurch gekennzeichnet, dass** der erste, mechanische Zweig (16) in Richtung des Kraftflusses (25) nach dem Planetenwendegetriebe (15) und der zweite Zweig (22) über eine erste Kupplung (K1) mit der Summierwelle (14) verbunden beziehungsweise verbindbar ist, die mit der Abtriebswelle (24) verbunden ist.

5. Leistungsverzweigungsgetriebe (30) nach Anspruch 4, **dadurch gekennzeichnet, dass** der erste, mechanische Zweig (16) abtriebsseitig der Koppelwelle (19) über eine ungerade Anzahl von Zahnrädern (Z11,Z12,Z13) mit der Summierwelle (14) verbunden ist.

6. Leistungsverzweigungsgetriebe (30) nach Anspruch 5, **dadurch gekennzeichnet, dass** dem zweiten Zweig (22) eine zweite Kupplung (K2) zugeordnet ist.

7. Leistungsverzweigungsgetriebe (30) nach Anspruch 6, **dadurch gekennzeichnet, dass** die erste Kupplung (K1) als eine der Summierwelle (14) zugeordnete Klauenkupplung ausgebildet ist zum lösbaren Zusammenwirken mit einer Hydrostatwelle (23) der zweiten Hydroeinheit (H2).

8. Leistungsverzweigungsgetriebe (30) nach Anspruch 7, **dadurch gekennzeichnet, dass** die zweite Kupplung (K2) der Hydrostatwelle (23) der zweiten Hydroeinheit (H2) zugeordnet und als Doppelklauenkupplung (K2V/K2R) ausgebildet ist zum Zusammenwirken der Hydrostateinheit (H2) über ein erstes Zahnradvorgelege (Z6,Z7) mit dem kleinen Sonnenrad (Z1') in der ersten geschlossenen Stellung (K2V) und zum Zusammenwirken über ein zweites Zahnradvorgelege (Z7',Z7",Z6',Z6) mit dem kleinen Sonnenrad (Z1') in der zweiten geschlossenen Stellung (K2R).

9. Leistungsverzweigungsgetriebe (30) nach einem der Ansprüche 5 bis 8, **dadurch gekennzeichnet, dass** zwischen dem auf der Koppelwelle (19) angeordneten Zahnrad (Z11) und dem dem Zahnrad (Z11) benachbarten, abtriebsseitig nachgeordneten Zahnrad (Z13) eine zusätzliche Getriebestufe (31) angeordnet ist, wobei das der Koppelwelle (19) zugeordnete Zahnrad (Z11) mit einem dritten Ergänzungszahnrad (Z11L) und ein der Koppelwelle (19) zugeordnetes erstes Ergänzungszahnrad (Z11') mit einem zweiten Ergänzungszahnrad (Z11'S) über zwei Kupplungen (KS,KL) lösbar mit dem benachbarten Zahnrad (Z13) koppeln.

10. Kraftfahrzeug mit einem Leistungsverzweigungsgetriebe (30) nach Anspruch 1.

11. Verfahren zum Betrieb eines Leistungsverzweigungsgetriebes (30) nach Anspruch 8, **dadurch gekennzeichnet, dass** in einem Vorwärts-Fahrbereich (V) die Schaltmuffe (Z23) in eine gegenüber dem Planetensteg (P) drehfest festgelegten Axialstellung verstellt wird und insgesamt mit der Planetengetriebeanordnung als Block umläuft, dass die erste Hydroeinheit (H1) über das Erste-Hydroeinheit-Zahnrad (Z5) und dem Erstes-Hohlrad-Außenkranz-Zahnrad (Z4) an einem Außenkranz des Hohlrades (Z3) mit diesem Hohlrad (Z3) gekoppelt ist, dass die zweite Hydroeinheit (H2) über die erste Kupplung (K1), Zahnräder (Z9,Z10) zwischen der Hydrostatwelle (23) und der ersten Kupplung (K1) mit der Summierwelle (14) gekoppelt ist, dass die erste Hydroeinheit (H1) aus einer Schwenklage mit einem Schwenkwinkel 0° in eine erste Schwenkrichtung in eine positiven Winkelbereich verschwenkt und als Pumpe (PU) betrieben wird, und dass die zweite Hydroeinheit (H2) als Motor (M) betrieben wird.

12. Verfahren nach Anspruch 11, **dadurch gekennzeichnet, dass** in einer zweiten Stufe des Vorwärts-Fahrbereiches (V) die erste Hydroeinheit (H1) als Motor (M) und die zweite Hydroeinheit (H2) als Pumpe (PU) betrieben wird, dass die zweite Hydroeinheit (H2) über die zweite Kupplung (K2) und ein erstes Zahnradvorgelege (Z6, Z7) mit dem Sonnenrad (Z1') gekoppelt ist und aus einer Schwenklage von 0° in einen negativen Winkelbereich verschwenkt wird.

13. Verfahren zum Betrieb eines Leistungsverzweigungsgetriebes (30) nach Anspruch 8, **dadurch gekennzeichnet, dass** in einem Rückwärts-Fahrbereich (R) die Schaltmuffe (Z23) in die Axialstellung verstellt wird, in der die Schaltmuffe (Z23) gegenüber dem Getriebegehäuse (17) drehfest festgelegt ist, dass die erste Hydroeinheit (H1) als Pumpe (PU) und die zweite Hydroeinheit (H2) als Motor (M) betrieben wird, und dass die erste Hydroeinheit H1 aus einer Schwenklage von 0° in eine zweite Schwenkrichtung in einen negativen Winkelbereich verschwenkt wird.

14. Verfahren nach Anspruch 13, **dadurch gekennzeichnet, dass** in einer zweiten Stufe des Rückwärts-Fahrbereiches (R) die erste Hydroeinheit (H1) als Motor (M) und die zweite Hydroeinheit (H2) als Pumpe (PU) betrieben wird, dass die zweite Hydroeinheit (H2) über die zweite Kupplung (K2) und das zweite Zahnradvorgelege (Z7',Z7", Z6',Z6) mit dem Sonnenrad (Z1') gekoppelt ist und aus einer Schwenklage von 0° in einen negativen Winkelbereich verschwenkt wird.

## Claims

1. Power split transmission (30) for a motor vehicle, with a drive shaft (12), with a first mechanical branch (16) that has a planetary gear arrangement (18) with at least two sun gears (Z1, Z1'), namely a large sun gear (Z1) and a small sun gear (Z1') compared to the large sun gear (Z1), a first ring gear (Z3) and a planetary web (P) on which double planetary gears (Z2, Z2') are arranged, which mesh with the sun gears (Z1, Z1') and with the first ring gear (Z3), at least one of the sun gears (Z1) being coupled to the drive shaft (12), with a continuously variable second branch (22) which can be connected at least partially via the planetary gear arrangement (18) to the first mechanical branch (16) and at least two adjustable hydro-units (H1, H2) which can be energetically coupled to one another and can be operated in both directions as a motor (M) or pump (PU), wherein the first hydro-unit (H1) being coupled to the ring gear (Z3) via a first hydro-unit gear (Z5) and a first-ring-gear-outer-ring-gear (Z4) on an outer ring of the ring gear (Z3), and with an output shaft (24) which can be coupled to the drive shaft (12) via the first mechanical branch (16) and the second branch (22), wherein the planetary gear arrangement (18) is assigned a planetary reversing gear (15) by means of which the direction of rotation of the first mechanical branch (16) can be reversed, **characterized in that** the planetary reversing gear (15) has an axially adjustable shift sleeve (Z23) which is formed as a reversing ring gear and which, in a first axial position, transmits the direction of rotation of the planetary web (P) directly to a reversing planetary gear (Z22, Z21, Z20) which, in the first mechanical branch (16) is coupled with a force-fit to a summing shaft (14) by means of three gear wheels, namely a gear wheel (Z11) associated with a coupling shaft (19), a gear wheel of the first mechanical branch (Z12) and an adjacent gear wheel (Z13), and which, in a second axial position is directly or indirectly blocked against rotation relative to a gear housing (17) of the power split transmission (30) in such a way that the direction of rotation of the planetary web (P) is reversed and acts with the direction of rotation reversed on the one summing shaft (14) via which the force of the first mechanical branch (16) and the second hydrostatic branch (22) is combined.

2. Power split transmission (30) according to claim 1, **characterized in that** the radially inner gear wheel (Z20) of the reversing planetary gear (Z20, Z21, Z22) is connected in a rotationally fixed manner to the first mechanical branch (16) by the coupling shaft (19).

3. Power split transmission (30) according to claim 2, **characterized in that** the coupling shaft (19) is designed as a hollow shaft and surrounds a PTO shaft (13) connected to the drive shaft (12).

4. Power split transmission (30) according to one of claims 1 to 3, **characterized in that** the first mechanical branch (16) is connected or connectable in the direction of the power flow (25) after the planetary reversing gear (15) and the second branch (22) is connected or connectable via a first coupling (K1) to the summing shaft (14), which is connected to the output shaft (24).

5. Power split transmission (30) according to claim 4, **characterized in that** the first mechanical branch (16) is connected to the summing shaft (14) on the output side of the coupling shaft (19) via an odd number of gear wheels (Z11, Z12, Z13).

6. Power split transmission (30) according to claim 5, **characterized in that** a second clutch (K2) is assigned to the second branch (22).

7. Power split transmission (30) according to claim 6, **characterized in that** the first clutch (K1) is designed as a claw clutch assigned to the summing shaft (14) for releasable cooperation with a hydrostatic shaft (23) of the second hydro-unit (H2).

8. Power split transmission (30) according to claim 7, **characterized in that** the second clutch (K2) is assigned to the hydrostatic shaft (23) of the second hydro-unit (H2) and is designed as a double claw clutch (K2V/K2R) for interaction of the second hydro-unit (H2) via a first gear train (Z6, Z7) with the small sun gear (Z1') in the first closed position (K2V) and for interacting via a second gear train (Z7', Z7", Z6', Z6) with the small sun gear (Z1') in the second closed position (K2R).

9. Power split transmission (30) according to one of claims 5 to 8, **characterized in that** an additional gear stage (31) is arranged between the gear wheel (Z11) assigned to the coupling shaft (19) and the gear wheel (Z13) adjacent to the gear wheel (Z11) arranged downstream on the output side, wherein the gear wheel (Z11) assigned to the coupling shaft (19) is coupled in a releasable manner to the adjacent gear wheel (Z13) via a third supplementary gear wheel (Z11L) and a first supplementary gear wheel (Z11') assigned to the coupling shaft (19) with a second supplementary gear wheel (Z11'5) via two couplings (KS, KL) in a releasable manner to the adjacent gear wheel (Z13).

10. Motor vehicle with a power split transmission (30) according to claim 1.

11. Method for operating a power split transmission (30) according to claim 8, **characterized in that** in a forward travel range (V), the shift sleeve (Z23) is moved into an axial position fixed relative to the planetary web (P) and rotates as a whole with the planetary gear arrangement as a block, **in that** the first hydro-unit (H1) is coupled to the planetary gear (Z3) via the first hydro-unit gear (Z5) and the first-ring-gear-outer-ring-gear (Z4) on an outer ring of the ring gear (Z3), that the second hydro-unit (H2) is coupled to the planetary gear (Z3) via the first clutch (K1), gears (Z9,Z10) between the hydrostatic shaft (23) and the first coupling (K1) with the summing shaft (14), **in that** the first hydro-unit (H1) is pivoted from a pivot position with a pivot angle of 0° in a first pivot direction into a positive angle range and is operated as a pump (PU), and that the second hydro-unit (H2) is operated as a motor (M).

12. Method according to claim 11, **characterized in that** in a second stage of the forward travel range (V), the first hydro-unit (H1) is operated as a motor (M) and the second hydro-unit (H2) is operated as a pump (PU), that the second hydro-unit (H2) is coupled to the sun gear (Z1') via the second coupling (K2) and a first gear train (Z6, Z7) and is pivoted from a pivot position of 0° into a negative angle range.

13. Method for operating a power split transmission (30) according to claim 8, **characterized in that**, in a reverse travel range (R), the shift sleeve (Z23) is moved into the axial position in which the shift sleeve (Z23) is fixed against rotation relative to the transmission housing (17), **in that** the first hydro-unit (H1) is operated as a pump (PU) and the second hydro-unit (H2) is operated as a motor (M), and **in that** the first hydro-unit **H1** is pivoted from a pivot position of 0° in a second pivot direction into a negative angle range.

14. Method according to claim 13, **characterized in that** in a second stage of the reverse travel range (R), the first hydro-unit (H1) is operated as a motor (M) and the second hydro-unit (H2) as a pump (PU), **in that** the second hydro-unit (H2) is coupled to the sun gear (Z1') via the second coupling (K2) and the second gear train (Z7', Z7", Z6', Z6) and is pivoted from a pivot position of 0° into a negative angle range.

## Revendications

1. Transmission à dérivation de puissance (30) pour un véhicule automobile, avec un arbre d'entraînement (12), avec une première branche mécanique (16) qui comporte un agencement d'engrenages planétaires (18) avec au moins deux engrenages solaires (Z1, Z1'), à savoir un grand engrenage solaire (Z1) et un petit engrenage solaire (Z1') par rapport au grand engrenage solaire (Z1), une première couronne dentée (Z3) et une couronne planétaire (P) sur laquelle sont disposés des engrenages planétaires doubles (Z2, Z2') qui engrènent avec les engrenages solaires (Z1, Z1') et avec la première couronne dentée (Z3), au moins l'un des pignons solaires (Z1) étant couplé à l'arbre d'entraînement (12), avec une deuxième branche à variation continue (22) qui peut être reliée au moins partiellement via le dispositif à engrenages planétaires (18) à la première branche mécanique (16) et au moins deux unités hydrauliques réglables (H1, H2) qui peuvent être couplées entre elles sur le plan énergétique et peuvent fonctionner dans les deux sens comme moteur (M) ou pompe (PU), la première unité hydraulique (H1) étant couplée à la couronne dentée (Z3) par l'intermédiaire d'un premier engrenage d'unité hydraulique (Z5) et d'un premier engrenage extérieur de couronne dentée (Z4) sur une couronne extérieure de la couronne dentée (Z3), et avec un arbre de sortie (24) qui peut être couplé à l'arbre d'entraînement (12) via la première branche mécanique (16) et la deuxième branche (22), dans lequel le dispositif d'engrenage planétaire (18) est associé à un engrenage planétaire inverseur (15) au moyen duquel le sens de rotation de la première branche mécanique (16) peut être inversé, **caractérisé en ce que** le mécanisme d'inversion planétaire (15) comporte un manchon de changement de vitesse (Z23) réglable axialement, qui est réalisé sous la forme d'une couronne d'inversion et qui, dans une première position axiale, transmet le sens de rotation de la pignon planétaire (P) directement à un engrenage planétaire d'inversion (Z22, Z21, Z20) qui, dans la première branche mécanique (16), est couplé par trois roues dentées, à savoir une roue dentée (Z11) associée à un arbre d'accouplement (19), une roue dentée de la première branche mécanique (Z12) et une roue dentée adjacente (Z13), et qui, dans une deuxième position axiale, est bloqué directement ou indirectement en rotation par rapport à un carter d'engrenage (17) de la transmission à répartition de puissance (30) de telle manière que le sens de rotation de la pignon planétaire (P) est inversé et agit avec le sens de rotation inversé sur l'arbre de sommation (14) par lequel la force de la première branche mécanique (16) et de la deuxième branche hydrostatique (22) est combinée.

2. Transmission à derivation de puissance (30) selon la revendication 1, **caractérisée en ce que** la roue dentée radialement intérieure (Z20) du pignon planétaire inverseur (Z20, Z21, Z22) est reliée de manière fixe en rotation à la première branche mécanique (16) par l'arbre d'accouplement (19).

3. Transmission à dérivation de puissance (30) selon la revendication 2, **caractérisée en ce que** l'arbre d'accouplement (19) est conçu comme un arbre creux et entoure un arbre de prise de force (13) relié à l'arbre d'entraînement (12).

4. Transmission à dérivation de puissance (30) selon l'une des revendications 1 à 3, **caractérisée en ce que** la première branche mécanique (16) est reliée ou peut être reliée dans le sens du flux de puissance (25) après l'engrenage planétaire inverseur (15) et la deuxième branche (22) est reliée ou peut être reliée via un premier accouplement (K1) à l'arbre de sommation (14) qui est relié à l'arbre de sortie (24).

5. Transmission à dérivation de puissance (30) selon la revendication 4, **caractérisée en ce que** la première branche mécanique (16) est reliée à l'arbre de sommation (14) du côté sortie de l'arbre d'accouplement (19) par l'intermédiaire d'un nombre impair de roues dentées (Z11, Z12, Z13).

6. Transmission à dérivation de puissance (30) selon la revendication 5, **caractérisée en ce qu'**un deuxième embrayage (K2) est associé à la deuxième branche (22).

7. Transmission à dérivation de puissance (30) selon la revendication 6, **caractérisée en ce que** le premier embrayage (K1) est conçu comme un embrayage à griffes associé à l'arbre de sommation (14) pour coopérer de manière libérable avec un arbre hydrostatique (23) de la deuxième unité hydraulique (H2).

8. Transmission à dérivation de puissance (30) selon la revendication 7, **caractérisée en ce que** le deuxième embrayage (K2) est associé à l'arbre hydrostatique (23) de la deuxième unité hydraulique (H2) et est conçu comme un embrayage à double griffes (K2V/K2R) pour l'interaction de la deuxième unité hydraulique (H2) via un premier train d'engrenages (Z6, Z7) avec le petit pignon solaire (Z1') dans la première position fermée (K2V) et pour interagir via un deuxième train d'engrenages (Z7', Z7", Z6', Z6) avec le petit pignon solaire (Z1') dans la deuxième position fermée (K2R).

9. Transmission à dérivation de puissance (30) selon l'une des revendications 5 à 8, **caractérisée en ce qu'**un étage d'engrenage supplémentaire (31) est disposé entre la roue dentée (Z11) associée à l'arbre d'accouplement (19) et la roue dentée (Z13) adjacente à la roue dentée (Z11) disposée en aval du côté sortie, dans laquelle la roue dentée (Z11) associée à l'arbre d'accouplement (19) est couplée de manière libérable à la roue dentée adjacente (Z13) par l'intermédiaire d'une troisième roue dentée supplémentaire (Z11L) et d'une première roue dentée supplémentaire (Z11') associée à l'arbre d'accouplement (19) avec une deuxième roue dentée supplémentaire (Z11'5) par l'intermédiaire de deux accouplements (KS, KL) de manière libérable à la roue dentée adjacente (Z13).

10. Véhicule automobile avec une transmission à dérivation de puissance (30) selon la revendication 1.

11. Procédé pour faire fonctionner une transmission à dérivation de puissance (30) selon la revendication 8, **caractérisé en ce que**, dans une plage de marche avant (V), le manchon de changement de vitesse (Z23) est déplacé dans une position axiale fixe par rapport à la poutre planétaire (P) et tourne dans son ensemble avec le dispositif d'engrenage planétaire en tant que bloc, **en ce que** la première unité hydraulique (H1) est couplée à l'engrenage planétaire (Z3) par l'intermédiaire du premier engrenage d'unité hydraulique (Z5) et de la première couronne dentée extérieure (Z4) sur une couronne extérieure de la couronne dentée (Z3), **en ce que** la deuxième unité hydraulique (H2) est couplée à l'engrenage planétaire (Z3) par l'intermédiaire du premier embrayage (K1), des engrenages (Z9, Z10) entre l'arbre hydraulique (23) et le premier accouplement (K1) avec l'arbre de sommation (14), **en ce que** la première unité hydraulique (H1) est pivotée à partir d'une position de pivotement avec un angle de pivotement de 0° dans une première direction de pivotement dans une plage d'angle positif et est actionnée comme une pompe (PU), et **en ce que** la deuxième unité hydraulique (H2) est actionnée comme un moteur (M).

12. Procédé selon la revendication 11, **caractérisé en ce que** dans une deuxième phase de la plage de marche avant (V), la première unité hydraulique (H1) est actionnée comme un moteur (M) et la deuxième unité hydraulique (H2) est actionnée comme une pompe (PU), **en ce que** la deuxième unité hydraulique (H2) est couplée à l'engrenage solaire (Z1') via le deuxième accouplement (K2) et un premier train d'engrenages (Z6, Z7) est pivotée d'une position de pivotement de 0° dans une plage angulaire négative.

13. Procédé pour faire fonctionner une transmission à dérivation de puissance (30) selon la revendication 8, **caractérisé en ce que**, dans une plage de marche arrière (R), le manchon de changement de vitesse (Z23) est déplacé dans la position axiale dans laquelle le manchon de changement de vitesse (Z23) est fixé en rotation par rapport au carter de transmission (17), **en ce que** la première unité hydraulique (H1) est actionnée comme une pompe (PU) et la deuxième unité hydraulique (H2) est actionnée comme un moteur (M), et **en ce que** la première unité hydraulique H1 est pivotée à partir d'une position de pivotement de 0° dans une deuxième direction de pivotement dans une plage d'angle négative.

14. Procédé selon la revendication 13, **caractérisé en ce que** dans une deuxième étape de la plage de marche arrière (R), la première unité hydraulique (H1) fonctionne comme un moteur (M) et la deuxième unité hydraulique (H2) comme une pompe (PU), **en ce que** la deuxième unité hydraulique (H2) est couplée à l'engrenage solaire (Z1') via le deuxième accouplement (K2) et le deuxième train d'engrenages (Z7', Z7", Z6', Z6) est pivotée à partir d'une position de pivotement de 0° dans une plage angulaire négative.
